# EUROPEAN PATENT SPECIFICATION

(11) **EP 3 295 839 B1**
(45) Date of publication and mention of the grant of the patent: **06.11.2019**
(21) Application number: 17191526.7
(22) Date of filing: 18.09.2017
(51) Int. Cl.: A47J 31/44, A47J 31/18, A47J 31/54

(54) **COFFEE MACHINE**
KAFFEEMASCHINE
MACHINE À CAFÉ

(30) Priority: 19.09.2016 TR 201612998
(43) Date of publication of application: 21.03.2018
(73) Proprietor: BSH Hausgeräte GmbH, 81739 München (DE)
(72) Inventor: Balik, Tufan, 34510 ISTANBUL (TR); Caglin, Muharrem Ümit, 34535 ISTANBUL (TR); Koru, Serkan, 59850 TEKIRDAG (TR)

(56) References cited:
- EP-A1- 1 522 242
- WO-A1-2006/000962
- WO-A1-2016/162181
- US-A1- 2011 259 203
- US-A1- 2016 007 798

## Description

The invention discloses a coffe machine and a method of brewing coffee.

Turkish coffee is brewed by preparing a mixture of ground coffee, water and sugar in a brewing pot. The mixture is heated gradually by a heat source directly under the brewing pot. When brewing Turkish coffee, it is important to prevent the mixture from reaching boiling point, since the taste of the coffee would be impaired and the mixture may overflow.

This problem has been addressed in a number of ways. Various models of Turkish coffee maker available on the market use some kind of sensor to detect when the application of heat should be interrupted. A characteristic feature of Turkish coffee is the development of froth in the brewing pot as the mixture heats up. A Turkish coffee machine is generally designed to ensure that the brewing process is stopped in time to prevent the froth from spilling over. In one approach, the contact between heating plate and brewing pot can be interrupted by either moving the brewing pot upwards and away from the heating plate, or by moving the heating plate downwards and away from the brewing pot. In some known models of Turkish coffee maker, this can be achieved by using a solenoid as an actuator to move the relevant component in the appropriate direction.

US 2016/0007798 A1 discloses embodiments and improved heating methods for use in coffee makers and other beverage makers that use hot water for various beverages and other purposes. Water to be dispensed from the system may flow from the water reservoir, through the heater assembly, through the temperature sensor, and if the water is at the desired dispensing temperature, through the valve and either to the brew outlet or to the hot water outlet. There may be provided one or more valves for delivering water to the brew outlet or to the hot water outlet. These improvements find particular use on-board aircraft or other passenger transport vehicles, where quick heating and reduced power consumption are particularly desirable and beneficial. Further embodiments also relate to improved water level sensing, improved water reservoirs, and improved carafe features.

US 2011/259203 A1 discloses a high efficiency coffee maker. An exemplary high efficiency coffee maker includes a heating element; and a passageway operable to conduct a liquid therethrough. The passageway has at least two overlapping portions, each of the overlapping portions being in thermal contact with the heating element. The said invention increases the area of heat transfer from the heating element into water to more efficiently heat the water.

EP 1522242 A1 discloses a brewing apparatus pod carrier including a frame forming a pod receiving cavity on a first side of the frame, a frothing chamber located below the pod receiving cavity, a brewed liquid outlet from the frothing chamber, and a connection section at a bottom end of the frame which is sized and shaped to have a frothing attachment removably connected thereto and supported by suspension from the bottom end of the frame.

WO 2006/000962 A1 discloses a coffee machine used to cook Turkish coffee comprising an overflow chamber collecting overflow liquids from the cooking chamber, which is produced during cooking process, when a heater whereby the cooking chamber is heated for a defined cooking period. Overflow liquids being transferred back to the cooking chamber as reasons of overflow are eliminated.

Known approaches involving moving parts as well as controllers and actuators to effect the required physical separation of the brewing pot from the heating plate or having an overflow chamber for collecting overflow liquids, are generally expensive to realise. In spite of the additional effort, these solutions fail to completely stop the transfer of heat from the heating plate to the brewing pot. This is because heat will continue to be transferred over the air between the heating plate and the brewing pot because the heating plate will still be hot for a while after being turned off. The froth level in the pot may therefore continue to rise as the coffee mixture continues to heat. Therefore, to reliably avoid overflow or spillage, it may be necessary to separate the heating plate from the brewing pot before the froth level has reached a critical level, i.e. before the brewing procedure is actually complete. Therefore, it is difficult for these solutions to provide a correctly brewed pot of coffee.
The performance of such a coffee machine might be improved if the heating plate could be removed from the bottom surface of the brewing pot by a distance that is great enough to eliminate the heat transfer over the intervening air. However, it is generally desired to keep the overall design of a coffee machine as compact as possible, regardless of whether the coffee machine is intended for commercial or domestic use. This design requirement limits the practicable separation between heating plate and brewing pot to a small distance, for example only a few millimetres. As explained already, heat is transferred from the heating plate (switched off but still hot) to the brewing pot over the intervening air, with the result that the mixture in the brewing pot continues to be heated beyond the ideal temperature. This can detract from the taste of the coffee.

It is therefore an object of the invention to provide a simpler and more effective way of interrupting the application of heat to the brewing pot.

This object is achieved by the coffee machine of claim 1, and by the method of brewing coffee according to claim 13.

According to the invention, the coffee machine comprises at least a heating plate realized to make contact with a lower surface or underside of a brewing pot of the coffee machine; and a control arrangement realized to activate the heating plate to initiate a coffee brewing procedure and to deactivate the heating plate upon completion of a coffee brewing procedure. The inventive coffee machine comprises a water duct arranged in the body of the heating plate; and a circulating arrangement which comprises a supply hose arranged between the water tank and the heating plate, and a return hose arranged between the heating plate and the water tank, coffee machine realized to circulate a quantity of cooling water through the water duct upon completion of the coffee brewing procedure to interrupt heat transfer from the heating plate to the brewing pot.

An advantage of the inventive coffee machine is that an effective interruption of the brewing procedure can be achieved without having to physically raise the brewing pot upwards from the heating surface of the heating plate, or without having to physically lower the heating plate downwards from the under surface of the brewing pot. The heating plate is effectively cooled instantaneously, so that heat transfer from the heating plate to the brewing pot is discontinued.

According to the invention, the method of brewing coffee - by means of a coffee machine comprising a heating plate realized to make contact with a lower surface of a brewing pot - comprises the steps of arranging a water duct in the body of the heating plate; heating the heating plate to initiate a coffee brewing procedure; and circulating a quantity of cooling water through the water duct to interrupt heat transfer from the heating plate to the brewing pot upon completion of the coffee brewing procedure.

An advantage of the inventive method is that the brewing procedure can be interrupted effectively and quickly at precisely the correct instance, while ensuring that heat is no longer transferred from the heating plate to the brewing pot. This can improve the quality of the coffee, by ensuring that the taste of the correctly brewed coffee is maintained. This is in contrast to some prior art coffee machines which turn off the heating plate after detecting that the brewing procedure is finished, but which are unable to prevent heat from being transferred to the brewing pot, so that the froth might spill over and the continued transfer might negatively affects the taste of the coffee.

Particularly advantageous embodiments and features of the invention are given by the dependent claims, as revealed in the following description. Features of different claim categories may be combined as appropriate to give further embodiments not described herein.

The inventive coffee machine can be used to brew various kinds of coffee. For example, the coffee machine can be realized as an electric percolator. However, without restricting the invention in any way, it may be assumed in the following that the coffee machine is an electric appliance realized to brew Turkish coffee. The brewing pot may therefore be assumed to be realised to contain a mixture of ground coffee, water and sugar. To this end, in a preferred embodiment of the invention the coffee machine comprises a mixing assembly for providing a mixture of ground coffee, water and sugar in the brewing pot in preparation of a coffee brewing procedure. The coffee machine may preferably comprise some kind of user interface to allow a user to select a desired strength, so that the mixing assembly then provides an appropriate mixture of ground coffee, water and sugar to the brewing pot. The mixing assembly can therefore comprise suitable components, for example a pump realized to transfer a quantity of water from a water tank via a filling hose to the brewing pot, and a dispenser for transferring a desired quantity of sugar into the brewing pot. Ground coffee may be dispensed by a suitable dispenser connecting a supply of previously ground coffee to the brewing pot, or by a coffee grinding unit that directly grinds roasted coffee beans and transfers the grounds to the brewing pot.

To carry out the brewing procedure, heat is applied to the brewing pot from below. To this end, the brewing pot and heating plate are preferably constructed to make good physical contact. For example, the circular base of a cylindrical brewing pot may be relatively wide and flat, and the heating plate may be realized to make contact over the entire base of the brewing pot. Of course, any shape is possible for a brewing pot, so that the base and heating plate need not necessarily be circular. To heat the mixture in the brewing pot, in a preferred embodiment of the invention a resistive heating element is embedded in the body of the heating plate. The skilled person will be familiar with the type of resistive element that is required, so that when a voltage is applied across the ends of the resistive heating element, the ensuing current through the resistive heating element causes it to reach a temperature that is sufficiently hot to heat the mixture in the brewing pot.

The heating plate is preferably made of a material than can heat up rapidly. For example, in a preferred embodiment of the invention, the heating plate is formed from a solid block of aluminium. This can be moulded into the desired shape, and can be formed to accommodate a resistive heating element as described above. The heating plate can also be formed to incorporate the water duct. For example, the water duct in the heating plate preferably extending within the body of the heating plate has a circular or semi-circular cross-section. In an alternative embodiment, the water duct can comprise an aluminium tube embedded in the body of the heating plate, or set into a recess or groove formed in the upper face of the heating plate. The water duct is arranged or incorporated in the heating plate so that any material thickness between the duct and the upper surface of the heating plate is as thin as possible, since a thin material layer will facilitate the cooling effect and ensure a rapid termination of the brewing procedure.

In a particularly preferred embodiment of the invention, the water tank contains the water supply of the coffee machine..

According to the invention, a return hose is used to remove the water from the heating plate. According to the invention, the return hose is arranged between the heating plate and the water tank. The supply hose and the return hose can be made of silicone material, allowing the said hoses to be arranged in a flexible manner between tank and heating plate.

To convey a quantity of cooling water through the water duct in the heating plate, in a preferred embodiment of the invention the circulating arrangement comprises a pump arranged to pump the cooling water through the water duct. A single pump with a suitable switching mechanism can be implemented, for example a pump which is controlled to convey water to the brewing pot prior to the brewing procedure, and which is controlled to convey water to the cooling duct upon completion of the brewing procedure. A solenoid valve may be used in the switching mechanism. Alternatively, separate pumps are used, i.e. a first pump that serves to convey water to the brewing pot prior to the brewing procedure, and a second pump that serves to convey water to the cooling duct upon completion of the brewing procedure.

When the mixture of water, ground coffee and sugar is heating during the brewing procedure, froth develops in the mixture and increases in height as the temperature of the mixture is raised. Therefore, when brewing Turkish coffee, it is important to stop the brewing procedure to prevent the froth mixture from overflowing. Therefore, in a preferred embodiment of the invention, the coffee machine comprises a sensor that is arranged to detect a condition indicative of completion of the coffee brewing procedure. For example, the sensor can face into the brewing pot to monitor the height of the mixture. The sensor can also be controlled to respond to the froth height according to the mixture chosen by a user, since different combinations of water, ground coffee and sugar will result in different quantities of froth during heating. By taking into account the actual combination of water, ground coffee and sugar for a specific brewing procedure, the sensor can output a suitable signal when the corresponding or predetermined froth level has been reached in order to activate the circulating arrangement and to deactivate the heating element. A single signal can be used both to activate the circulating arrangement and to deactivate the heating element, but this does not exclude the possibility of realizing the sensor to issue separate signals for these actions.

The signal output by the sensor to the circulating arrangement can be a simple "enable" or "trigger" signal, for example the sensor may be realised to actuate or turn on the cooling water pump upon completion of the coffee brewing procedure, i.e. as soon as the predetermined froth level has been reached for the current brewing procedure.

The quantity of cooling water required to interrupt the brewing procedure and/or the length of time during which the cooling water is conveyed through the heating plate may be established in advance through experimentation and observation. Certain combinations of water, ground coffee and sugar may therefore be related to cooling parameters such as the "on time" of the pump used to convey the cooling water through the duct in the heating plate. Alternatively or in addition, the sensor may continue to monitor the froth level, and may continue to actuate the pump as long as the froth level is at or above a predetermined level. Equally, in a further preferred embodiment of the invention, the duration of the cooling procedure may be monitored, for example by a thermostat. A temperature sensor in the heating plate may be use to decide whether the cooling water pump should continue to operate (the heating plate is still too hot), or whether it can be turned off (the temperature of the heating plate has dropped to a satisfactory level).

The water duct may be arranged to follow the shape of the heating plate. For example, in the case of a circular heating plate shape, the water duct can describe a circular path within the body of the heating plate. The cooling effectiveness may be increased by increasing the length of the water duct. Therefore, in a particularly preferred embodiment of the invention, the water duct can be arranged to double back on itself within the body of the heating plate. Alternatively, the water duct may follow a spiral path.

Other objects and features of the present invention will become apparent from the following detailed descriptions considered in conjunction with the accompanying drawings.

It is to be understood, however, that the drawings are designed solely for the purposes of illustration and not as a definition of the limits of the invention.
- Fig. 1: shows a schematic representation of an embodiment of a coffee machine according to the invention;
- Fig. 2: shows a partial cross-section of a heating plate of the coffee machine of Fig. 1;
- Fig. 3: shows a side view of the heating plate of Fig. 2;
- Fig. 4 to Fig.7: show an alternative construction of a heating plate of a coffee machine according to the invention;
- Fig. 8: shows an alternative realisation of a water duct 6.

In the drawings, like numbers refer to like objects throughout. Objects in the diagrams are not necessarily drawn to scale.

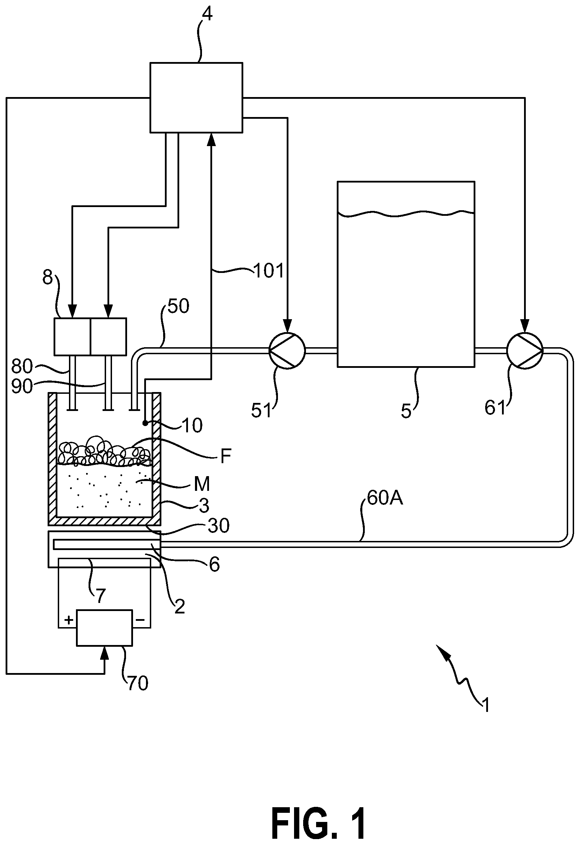

Fig. 1 is a schematic representation of an embodiment of a coffee machine 1 according to the invention, and shows a brewing pot 3 which can be placed on a heating plate 2. A user (not shown) can select a desired combination of coffee, sugar and water by means of a suitable user interface so that a control arrangement 4 causes a coffee supply 8 to add ground coffee to the brewing pot from a dispenser 80; causes a sugar supply 9 to add sugar to the brewing pot from a dispenser 90; and causes a pump 51 to pump a quantity of water into the brewing pot 3 from a tank 5 via a filling hose 50. The resulting mixture M of water, ground coffee and sugar will be heated in a brewing procedure.

In this exemplary embodiment, the control arrangement 4 is realized to heat the heating plate by activating a voltage supply 70 to apply a voltage across leads of a heating element 7 embedded in the heating plate 2. During the brewing procedure, froth F develops on the top of the mixture M. In this exemplary embodiment, a sensor 10 monitors the height of the froth F in the brewing pot 3 and issues a signal 101 when the froth level has reached a height that indicates that the mixture M is finished brewing. Of course, a temperature sensor could be used to monitor the temperature of the mixture M and to indicate completion of the brewing procedure.

The control arrangement 4 responds by switching off the heating element 7 and by actuating a cooling water pump 61 to pump a quantity of cooling water through a supply hose 60A and into a water duct 6 in the heating plate 2. The cool water effectively cools the heating plate instantaneously, thereby stopping the transfer of heat from the heating plate 2 to the brewing pot 3, so that the brewing procedure is terminated promptly. The essentially instantaneous cooling of the heating plate 2 ensures that the taste of the brewed coffee will not suffer from overheating, and will also ensure that froth will not build up to a height that would cause overspill from the brewing pot 3.

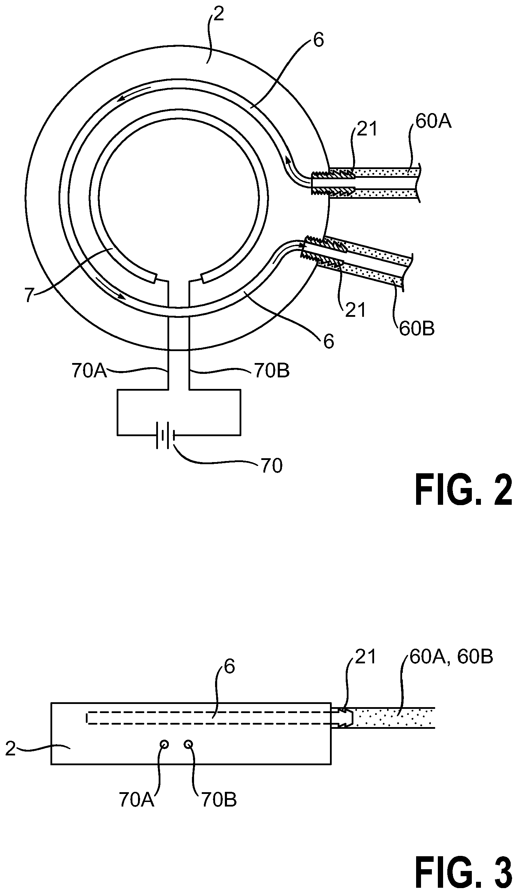

Fig. 2 shows a partial cross-section of a heating plate 2 of the coffee machine of Fig. 1. The diagram shows a circular heating plate 2, with a heating element 7 arranged in the body of the heating plate 2. The heating plate 2 might be made of aluminium on account of its favourable thermal properties. In this exemplary embodiment, the heating element 7 can be a resistive coil 7 which heats rapidly when a sufficiently high electric current is made to pass through it. The diagram shows appropriate electrical leads 70A, 70B connecting the resistive coil 7 with a DC voltage 70. Of course, any suitable power supply and heating element may be used.

The diagram also shows the water duct 6 arranged to extend through the body of the heating plate 2 and to cover a relatively large area of the circular shape. A supply hose 60A is arranged to provide cooling water from the coffee machine's water tank (not shown), and a return hose 60B can return the water to the tank. A pump (not shown) will circulate the water through the water duct 6 in the direction shown. In this embodiment, threaded barb connectors are screwed into threaded bushings formed in the heating plate 2 at the entry and exit points of the water duct 6, and silicon supply hose 60A, return hose 60B are securely pushed over the barbs to ensure a water-tight connection.

Fig. 3 shows a side view of the heating plate of Fig. 2, indicating the water duct 6 in the body of the heating plate 2, close to its upper surface. The diagram also indicates a barbed connector 21 and a supply hose 60A, and a return hose 60B pushed over the barbs, and the leads 70A, 70B for connecting the heating element to a voltage supply.

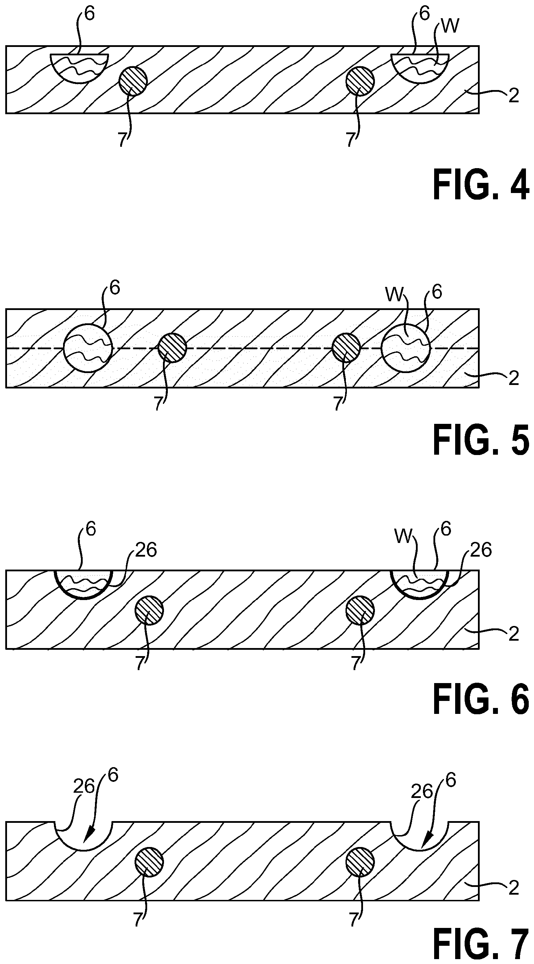

Figs. 4 - 7 show alternative realizations of the heating plate 2. In Fig. 4, the water duct 6 has a semi-circular cross-section with a flat upper side, in order to increase the surface area of the heating plate 2 that is cooled by the cooling water W. In Fig. 5, the water duct 6 has a circular cross-section. This realisation may be simple to construct, since the heating plate can be made of two moulded halves that are pressed together, as indicated by the dashed line. In Fig. 6, a recess 26 or groove 26 is formed or arranged in the upper surface of the heating plate 2, and a separate water duct 6 is placed in this groove 26. Here, the water duct 6 has a semi-circular cross-section. In the diagram, the water duct 6 is shown as a closed duct with a flat upper side. Alternatively, as shown in Fig. 7, the recess 26 or groove 26 itself can act as the water duct 6, remaining open at the top. Suitable connections to the supply hose 60A and the return hose 60B may ensure that water is not spilled.

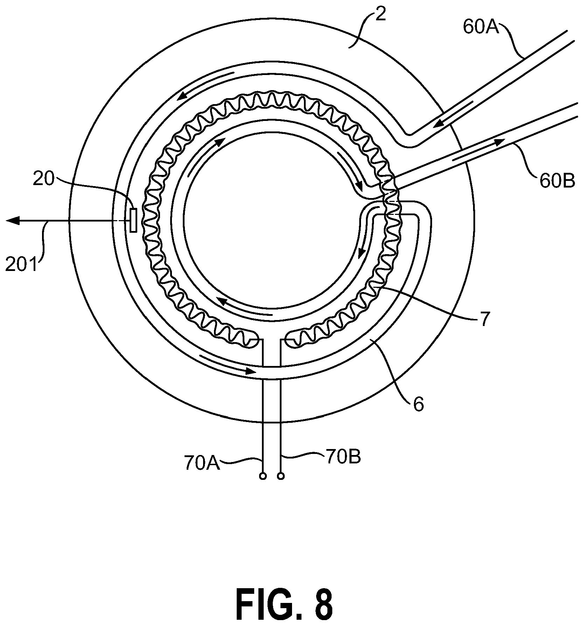

Fig. 8 shows a realisation in which the water duct 6 doubles back on itself to increase the length of the cooling circuit within the heating plate 2. In this exemplary embodiment, the water duct 6 is arranged to lie on either side of the heating element 7, and can very efficiently use the cooling water to decrease the temperature of the heating plate 2 once the heating element 7 is turned off. Here, a temperature sensor 20 is arranged in the heating plate 2, preferably close to the upper surface of the heating plate 2. The temperature sensor 20 is positioned to monitor the temperature in this region, and to provide the control arrangement 4 with temperature measurement values 201. The control arrangement 4 as described in Fig. 1 can control the cooling water pump 61 to continue pumping cooling water into the water duct 6 until the temperature of the heating plate 2 has dropped to a satisfactory level.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

**List of reference signs**

| | |
|---|---|
| coffee machine | 1 |
| heating plate | 2 |
| temperature sensor | 20 |
| temperature value | 201 |
| barbed connector | 21 |
| brewing pot | 3 |
| lower surface | 30 |
| control arrangement | 4 |
| water tank | 5 |
| water duct | 6 |
| filing hose | 50 |
| pump | 51 |
| supply hose | 60A |
| return hose | 60B |
| cooling water pump | 61 |
| resistive coil | 7 |
| voltage supply | 70 |
| coffee supply | 8 |
| coffee dispenser | 80 |
| sugar supply | 9 |
| sugar dispenser | 90 |
| sensor | 10 |
| signal | 101 |
| cooling water | W |
| brewing mixture | M |

## Claims

1. A coffee machine (1) comprising at least
- a heating plate (2) realized to make contact with a lower surface (30) of a brewing pot (3) of the coffee machine (1); and
- a control arrangement (4) realized to activate the heating plate (2) to initiate a coffee brewing procedure and to deactivate the heating plate (2) upon completion of the coffee brewing procedure;
**characterized by**
- a water duct (6) arranged in the body of the heating plate (2); and
- a circulating arrangement comprises:
- a supply hose (60A) arranged between a water tank (5) and the heating plate (2), and
- a return hose (60B) arranged between the heating plate (2) and the water tank (5),
realized to circulate a quantity of cooling water (W) through the water duct (6) upon completion of the coffee brewing procedure to interrupt heat transfer from the heating plate (2) to the brewing pot (3).

2. A coffee machine according to claim 1 wherein the circulating arrangement comprises a cooling water pump (61) arranged to pump the cooling water (W) through the water duct (6).

3. A coffee machine according to any of the preceding claims, comprising a sensor (10) arranged to detect a condition indicative of completion of the coffee brewing procedure.

4. A coffee machine according to claim 3, wherein the sensor (10) is realized to monitor a froth level in the brewing pot (3) and/or a sensor is realized to monitor a temperature of a mixture (M) in the brewing pot (3).

5. A coffee machine according to any of claims 3 to 4, wherein the sensor (10) is realised to provide a signal (101) to the control arrangement (4) to trigger actuation of the cooling water pump (61).

6. A coffee machine according to any of the preceding claims, wherein the water duct (6) comprises an aluminium tube.

7. A coffee machine according to any of preceding claims, wherein the supply hose (60A) and the return hose (60B) are made of silicone material.

8. A coffee machine according to any of claims 1 to 7, wherein the heating plate (2) is made of aluminium, and wherein the water duct (6) has a circular or a semi-circular cross-section within the body of the heating plate (2).

9. A coffee machine according to any of the preceding claims, comprising a resistive coil (7) embedded in the body of the heating plate (2).

10. A coffee machine according to any of the preceding claims, comprising a temperature sensor (20) embedded in the body of the heating plate (2).

11. A coffee machine according to any of the preceding claims, comprising a filing hose (50) arranged to transfer a quantity of water from the water tank (5) to the brewing pot (3).

12. A coffee machine according to any of the preceding claims, realized as a Turkish coffee machine (1) and comprising a mixing assembly (51, 8, 9) for providing a mixture (M) of ground coffee, water and sugar in the brewing pot (3) in preparation of a coffee brewing procedure.

13. A method of brewing coffee by means of a coffee machine (1) comprising a heating plate (2) realized to make contact with a lower surface (30) of a brewing pot (3), which method comprises the steps of
- arranging a water duct (6) in the body of the heating plate (2);
- heating the heating plate (2) to initiate a coffee brewing procedure; and
- circulating a quantity of cooling water (W) through the water duct (6) to interrupt heat transfer from the heating plate (2) to the brewing pot (3) upon completion of the coffee brewing procedure.

## Patentansprüche

1. Kaffeemaschine (1), welche wenigstens umfasst:
- eine Heizplatte (2), die dafür ausgelegt ist, einen Kontakt mit einer Unterseite (30) eines Brühtopfes (3) der Kaffeemaschine (1) herzustellen; und
- eine Steuerungsanordnung (4), die dafür ausgelegt ist, die Heizplatte (2) zu aktivieren, um einen Vorgang des Kaffeebrühens einzuleiten, und die Heizplatte (2) nach Abschluss des Vorgangs des Kaffeebrühens zu deaktivieren;
**gekennzeichnet durch**
- einen Wasserkanal (6), der im Körper der Heizplatte (2) angeordnet ist; und
- eine Zirkulationsanordnung, welche umfasst:
- einen Zulaufschlauch (60A), der zwischen einem Wassertank (5) und der Heizplatte (2) angeordnet ist, und
- einen Rücklaufschlauch (60B), der zwischen der Heizplatte (2) und dem Wassertank (5) angeordnet ist,
die dafür ausgelegt sind, nach Abschluss des Vorgangs des Kaffeebrühens eine Menge an Kühlwasser (W) durch den Wasserkanal (6) zirkulieren zu lassen, um die Wärmeübertragung von der Heizplatte (2) zum Brühtopf (3) zu unterbrechen.

2. Kaffeemaschine nach Anspruch 1, wobei die Zirkulationsanordnung eine Kühlwasserpumpe (61) umfasst, die dafür eingerichtet ist, das Kühlwasser (W) durch den Wasserkanal (6) zu pumpen.

3. Kaffeemaschine nach einem der vorhergehenden Ansprüche, welche einen Sensor (10) umfasst, der dafür eingerichtet ist, einen Zustand zu erkennen, der für den Abschluss des Vorgangs des Kaffeebrühens indikativ ist.

4. Kaffeemaschine nach Anspruch 3, wobei der Sensor (10) dafür ausgelegt ist, einen Schaumpegel im Brühtopf (3) zu überwachen, und/oder ein Sensor dafür ausgelegt ist, eine Temperatur eines Gemischs (M) im Brühtopf (3) zu überwachen.

5. Kaffeemaschine nach einem der Ansprüche 3 bis 4, wobei der Sensor (10) dafür ausgelegt ist, der Steuerungsanordnung (4) ein Signal (101) zuzuführen, um eine Betätigung der Kühlwasserpumpe (61) auszulösen.

6. Kaffeemaschine nach einem der vorhergehenden Ansprüche, wobei der Wasserkanal (6) ein Aluminiumrohr umfasst.

7. Kaffeemaschine nach einem der vorhergehenden Ansprüche, wobei der Zulaufschlauch (60A) und der Rücklaufschlauch (60B) aus Silikonmaterial hergestellt sind.

8. Kaffeemaschine nach einem der Ansprüche 1 bis 7, wobei die Heizplatte (2) aus Aluminium hergestellt ist und wobei der Wasserkanal (6) innerhalb des Körpers der Heizplatte (2) einen kreisförmigen oder halbkreisförmigen Querschnitt aufweist.

9. Kaffeemaschine nach einem der vorhergehenden Ansprüche, welche eine Widerstandsspule (7) umfasst, die in den Körper der Heizplatte (2) eingebettet ist.

10. Kaffeemaschine nach einem der vorhergehenden Ansprüche, welche einen Temperatursensor (20) umfasst, der in den Körper der Heizplatte (2) eingebettet ist.

11. Kaffeemaschine nach einem der vorhergehenden Ansprüche, welche einen Füllschlauch (50) umfasst, der dafür eingerichtet ist, eine Menge an Wasser aus dem Wassertank (5) zum Brühtopf (3) zu leiten.

12. Kaffeemaschine nach einem der vorhergehenden Ansprüche, welche als eine türkische Kaffeemaschine (1) ausgeführt ist und eine Mischanordnung (51, 8, 9) zum Bereitstellen eines Gemischs (M) aus gemahlenem Kaffee, Wasser und Zucker im Brühtopf (3) in Vorbereitung eines Vorgangs des Kaffeebrühens umfasst.

13. Verfahren zum Brühen von Kaffee mittels einer Kaffeemaschine (1), welche eine Heizplatte (2) umfasst, die dafür ausgelegt ist, einen Kontakt mit einer Unterseite (30) eines Brühtopfes (3) herzustellen, wobei das Verfahren die Schritte umfasst:
- Anordnen eines Wasserkanals (6) im Körper der Heizplatte (2);
- Erhitzen der Heizplatte (2), um einen Vorgang des Kaffeebrühens einzuleiten; und
- Bewirken der Zirkulation einer Menge an Kühlwasser (W) durch den Wasserkanal (6) nach Abschluss des Vorgangs des Kaffeebrühens, um die Wärmeübertragung von der Heizplatte (2) zum Brühtopf (3) zu unterbrechen.

## Revendications

1. Machine à café (1) comprenant au moins :
- une plaque chauffante (2) conçue pour faire contact avec une surface inférieure (30) d'un pot d'infusion (3) de la machine à café (1) ; et
- un agencement de commande (4) conçu pour activer la plaque chauffante (2) pour initier une procédure d'infusion de café et désactiver la plaque chauffante (2) lors de l'achèvement de la procédure d'infusion de café ;
**caractérisée par**
- un conduit d'eau (6) agencé dans le corps de la plaque chauffante (2) ; et
- un agencement de circulation comprenant :
- un tuyau d'alimentation (60A) agencé entre un réservoir d'eau (5) et la plaque chauffante (2), et
- un tuyau de retour (60B) agencé entre la plaque chauffante (2) et le réservoir d'eau (5),
conçu pour faire circuler une quantité d'eau de refroidissement (W) à travers le conduit d'eau (6) lors de l'achèvement de la procédure d'infusion de café pour interrompre le transfert de chaleur de la plaque chauffante (2) au pot d'infusion (3).

2. Machine à café selon la revendication 1, dans laquelle l'agencement de circulation comprend une pompe d'eau de refroidissement (61) agencée pour pomper l'eau de refroidissement (W) à travers le conduit d'eau (6).

3. Machine à café selon l'une quelconque des revendications précédentes, comprenant un capteur (10) agencé pour détecter une condition indicative de l'achèvement de la procédure d'infusion de café.

4. Machine à café selon la revendication 3, dans laquelle le capteur (10) est conçu pour surveiller un niveau de mousse dans le pot d'infusion (3) et/ou un capteur est conçu pour surveiller une température d'un mélange (M) dans le pot d'infusion (3).

5. Machine à café selon l'une quelconque des revendications 3 à 4, dans laquelle le capteur (10) est conçu pour fournir un signal (101) à l'agencement de commande (4) afin de déclencher l'actionnement de la pompe d'eau de refroidissement (61).

6. Machine à café selon l'une quelconque des revendications précédentes, dans laquelle le conduit d'eau (6) comprend un tube en aluminium.

7. Machine à café selon l'une quelconque des revendications précédentes, dans laquelle le tuyau d'alimentation (60A) et le tuyau de retour (60B) sont constitués d'un matériau de silicone.

8. Machine à café selon l'une quelconque des revendications 1 à 7, dans laquelle la plaque chauffante (2) est constituée d'aluminium, et dans laquelle le conduit d'eau (6) a une section en coupe circulaire ou semi-circulaire au sein du corps de la plaque chauffante (2).

9. Machine à café selon l'une quelconque des revendications précédentes, comprenant une bobine résistive (7) incorporée dans le corps de la plaque chauffante (2).

10. Machine à café selon l'une quelconque des revendications précédentes, comprenant un capteur de température (20) incorporé dans le corps de la plaque chauffante (2).

11. Machine à café selon l'une quelconque des revendications précédentes, comprenant un tuyau de remplissage (50) agencé pour transférer une quantité d'eau du réservoir d'eau (5) au pot d'infusion (3).

12. Machine à café selon l'une quelconque des revendications précédentes, conçue comme une machine à café turc (1) et comprenant un ensemble mélange (51, 8, 9) destiné à fournir un mélange (M) de café moulu, d'eau et de sucre dans le pot d'infusion (3) dans la préparation d'une procédure d'infusion de café.

13. Procédé d'infusion de café au moyen d'une machine à café (1) comprenant une plaque chauffante (2) conçue pour faire contact avec une surface inférieure (30) d'un pot d'infusion (3), lequel procédé comprend les étapes de :
- agencement d'un conduit d'eau (6) dans le corps de la plaque chauffante (2) ;
- chauffage de la plaque chauffante (2) pour initier une procédure d'infusion de café ; et
- circulation d'une quantité d'eau de refroidissement (W) à travers le conduit d'eau (6) pour interrompre le transfert de chaleur de la plaque chauffante (2) au pot d'infusion (3) lors de l'achèvement de la procédure d'infusion de café.
